# FASCICULE DE BREVET EUROPEEN

(11) **EP 1 428 463 B1**
(45) Date de publication et mention de la délivrance du brevet: **18.07.2007**
(21) Numéro de dépôt: 03356194.5
(22) Date de dépôt: 09.12.2003
(51) Int. Cl.: A47J 37/12

(54) **Friteuse electrique avec un dispositif pour le maintien au chaud des aliments frits**
Elektrische Friteuse mit Warmhaltevorrichtung für fritierte Speisen
Electric fryer with a holding warm device for the fried food

(30) Priorité: 13.12.2002 FR 0215831
(43) Date de publication de la demande: 16.06.2004
(73) Titulaire: SEB S.A., 69130 Ecully (FR)
(72) Inventeur: Marotel, Michel, 21310 Cheuge (FR); Payen, Jean-Marc, 21800 Quetigny (FR)
(74) Mandataire: Kiehl, Hubert

(56) Documents cités:
- US-A- 5 682 809
- US-A- 5 996 477
- US-B1- 6 182 558

## Description

La présente invention concerne le domaine technique des friteuses électriques domestiques. La présente invention concerne plus particulièrement les friteuses électriques domestiques comportant une cuve montée dans un boîtier extérieur.

La qualité gustative des aliments frits décroît après que les aliments sont sortis du bain de friture, notamment du fait que la diminution de la température entraîne une atténuation plus ou moins prononcée de l'aspect croustillant desdits aliments. Cette évolution est particulièrement présente pour les pommes de terres frites, qui représentent généralement une proportion importante des aliments frits.

Il est connu du document US 4 889 972 un appareil électrique de cuisson multifonctions comportant un boîtier contenant une cuve associée à des moyens de chauffe électriques, la paroi latérale du boîtier présentant une ouverture latérale permettant l'accès à une chambre ménagée dans le boîtier en dessous de la cuve. Les moyens de chauffe électriques sont prévus pour chauffer aussi la chambre. Toutefois la paroi supérieure de la chambre est formée par une tôle perforée. Cette disposition expose directement les aliments contenus dans ladite chambre au rayonnement des moyens de chauffe électriques. De plus, cette disposition complique le nettoyage de ladite chambre.

L'objet de la présente invention est de proposer une friteuse électrique domestique qui permette de préparer des quantités plus importantes d'aliments sans affecter de manière importante leur qualité gustative, et sans nécessiter un volume de bain de friture plus important.

Un autre objet de la présente invention est de proposer une friteuse électrique du type précité, dont l'encombrement est comparable à l'encombrement des friteuses domestiques usuelles.

Un autre objet de la présente invention est de proposer une friteuse électrique du type précité, dont la construction reste économique.

Un autre objet de la présente invention est de proposer une friteuse électrique du type précité, dont l'utilisation soit aisée.

Ces objets sont atteints avec une friteuse électrique domestique comportant un boîtier présentant un fond et une paroi latérale, le boîtier contenant une cuve associée à des moyens de chauffe électriques, la paroi latérale du boîtier présentant une ouverture latérale permettant l'accès à une chambre de maintien au chaud ménagée dans le boîtier en dessous de la cuve, les moyens de chauffe électriques étant prévus pour chauffer la chambre de maintien au chaud, du fait qu'une tôle de protection, ou un réflecteur, ou le fond de la cuve est agencé(e) entre les moyens de chauffe électriques et la chambre de maintien au chaud. En effet, la présence d'une tôle de protection, d'un réflecteur ou du fond de la cuve entre les moyens de chauffe électriques et la chambre de maintien au chaud permet de limiter la température atteinte dans la chambre de maintien au chaud et de mieux diffuser la chaleur. Une exposition directe au rayonnement des moyens de chauffe électriques utilisés pour le chauffage du bain d'huile entraîne des températures localement trop élevées dans la chambre de maintien au chaud, ce qui contribue à dégrader la qualité des aliments frits placés dans cette chambre. Les dispositions proposées permettent de servir simultanément dans de bonnes conditions des aliments réalisés en deux opérations de friture successives. Ces dispositions permettent ainsi de servir deux types d'aliments frits différents, par exemple des pommes de terre frites et de la viande panée, ou encore de servir une plus grande quantité d'un même aliment, sans devoir utiliser un bain de friture ayant un volume plus important. Les aliments disposés dans la chambre de maintien au chaud conservent une meilleure qualité gustative. De plus, lorsque deux aliments différents nécessitent des durées différentes de maintien dans le bain de friture, ces dispositions facilitent la gestion de la cuisson. En outre, ces dispositions facilitent le nettoyage de la chambre de maintien au chaud.

Selon une forme de réalisation, la tôle de protection forme au moins une partie d'une paroi supérieure de la chambre de maintien au chaud. Les moyens de chauffe électriques peuvent être en contact permanent avec la tôle de protection pour les friteuses à cuve fixe ou amovible dans lesquelles les éléments chauffants sont montés dans le boîtier. Toutefois les moyens de chauffe électriques peuvent également être montés solidaires d'une cuve montée amovible dans le boîtier. La tôle de protection permet de mieux répartir les calories dans la chambre de maintien au chaud en évitant une surchauffe des aliments disposés près des moyens de chauffe. La tôle de protection permet également de faciliter le nettoyage de l'intérieur de la chambre de maintien au chaud, et d'interdire à l'utilisateur l'accès aux moyens de chauffe.

Alors selon une forme de réalisation préférée la tôle de protection est en contact thermique avec les moyens de chauffe électriques. Cette disposition est bien adaptée pour les friteuses comportant une cuve montée fixe dans le boîtier, ou encore pour les friteuses comportant une cuve amovible sous laquelle est fixé un élément chauffant. En alternative, la tôle de protection peut être agencée à distance des moyens de chauffe électriques.

Avantageusement encore la tôle de protection forme au moins une partie d'une paroi latérale de la chambre de maintien au chaud. Cette disposition permet de ménager un compartiment prévu notamment pour recevoir des organes électriques de la friteuse.

Selon une autre forme de réalisation, le réflecteur est monté dans une contre-cuve dans laquelle est logée la cuve. Cette disposition est bien adaptée pour les friteuses comportant une cuve montée amovible dans le boîtier, les éléments chauffants étant solidaires du boîtier.

Selon une autre forme de réalisation, les moyens de chauffe électriques sont agencés à l'intérieur de la cuve. Les moyens de chauffe électriques chauffent ainsi directement le bain de cuisson.

Selon un mode de réalisation, les moyens de chauffe électriques sont susceptibles d'échauffer le fond de la cuve, et la chambre de maintien au chaud est disposée au moins partiellement en dessous des moyens de chauffe électriques. Selon cette forme de réalisation, les moyens de chauffe électriques peuvent être disposés dans la paroi du fond de la cuve. Les moyens de chauffe électrique peuvent également être disposés contre le fond de la cuve, à l'intérieur ou à l'extérieur de la cuve. Les moyens de chauffe électriques peuvent également être disposés à l'intérieur de la cuve à proximité du fond de la cuve. Dans ce cas la cuve ne présente pas de zone froide sous l'élément chauffant et la température du fond de la cuve est proche de celle du bain de friture. Les moyens de chauffe électriques peuvent également être disposés à l'extérieur de la cuve à proximité du fond de la cuve. Le chauffage de la cuve peut alors s'effectuer par rayonnement, ou encore par conduction si un pont thermique relie les moyens de chauffe électriques à la cuve. Dans de tels appareils, un espace est prévu sous le fond de la cuve pour éviter un échauffement trop important du fond du boîtier. Les dispositions de l'invention permettent d'utiliser l'espace présent sous le fond de la cuve et la chaleur fournie par les moyens de chauffe pour garder dans ladite chambre les aliments frits lors d'une première opération de friture, pendant la friture d'une autre quantité d'aliments. Si nécessaire, des moyens de chauffe électriques additionnels peuvent compléter le chauffage de la chambre de maintien au chaud.

Selon un autre mode de réalisation, des moyens de chauffe électriques additionnels sont prévus pour assurer l'essentiel du chauffage de la chambre de maintien au chaud. Selon cette forme de réalisation les moyens de chauffe électriques sont par exemple agencés dans la cuve de manière à former une zone froide dans le bain de friture. Cette dernière disposition contribuant à augmenter le volume total du bain de friture, les dispositions de l'invention permettent d'envisager de réduire le volume utile du bain de friture tout en permettant de réaliser des quantités importantes d'aliments frits avec de bonnes conditions gustatives.

Avantageusement, la chambre de maintien au chaud communique par au moins un passage avec l'extérieur du boîtier, afin de laisser échapper la vapeur issue des aliments frits disposés dans la chambre de maintien au chaud. Cette disposition permet d'éviter une dénaturation de la qualité gustative des aliments. En effet, le maintien au chaud des aliments frits dans une enceinte confinée provoque leur ramollissement et génère un goût moins agréable. De préférence, le passage débouche dans la partie supérieure de la chambre de maintien au chaud.

Avantageusement, l'ouverture latérale est obturée au moins partiellement par une porte. Cette disposition permet de limiter les déperditions thermiques.

Avantageusement alors le passage est ménagé entre la porte et la paroi latérale du boîtier, cette disposition étant simple à réaliser. D'autres dispositions sont envisageables, par exemple un orifice d'évacuation de vapeur ménagé dans une paroi du boîtier et relié à la chambre de maintien au chaud.

Selon une forme de réalisation avantageuse, la porte forme une paroi latérale externe d'un tiroir susceptible d'être disposé dans la chambre de maintien au chaud. Cette disposition permet de faciliter la mise au chaud et le retrait des aliments. Le tiroir est de préférence monté amovible par rapport au boîtier. Le tiroir peut notamment être monté coulissant dans la chambre de maintien au chaud, ou encore être monté pivotant par rapport au boîtier.

Avantageusement alors le tiroir comporte un fond muni de conformations en relief. Cette disposition permet de favoriser l'égouttage des aliments conservés dans le tiroir.

Selon une construction avantageuse, des organes électriques de régulation et/ou de sécurité sont disposés dans un compartiment agencé dans le boîtier sous la cuve latéralement par rapport à la chambre de maintien au chaud. Cette disposition permet de réduire l'encombrement latéral de la friteuse.

Avantageusement alors, pour permettre une meilleure régulation de la température du bain de friture disposé dans la cuve, une zone froide est ménagée sous la cuve au dessus dudit compartiment, les organes électriques de régulation et/ou de sécurité étant agencés dans ladite zone froide.

Avantageusement l'ouverture latérale est ménagée dans une partie inférieure du boîtier, le fond du boîtier appartenant à ladite partie inférieure. Cette disposition permet de simplifier l'assemblage de la friteuse.

Avantageusement encore les moyens de chauffe électriques additionnels comprennent un élément chauffant disposé dans la partie inférieure de la chambre de maintien au chaud. Cette disposition permet une meilleure homogénéité du maintien au chaud, en particulier pour les friteuses comportant des moyens de chauffe électriques susceptibles d'échauffer le fond de la cuve. L'élément chauffant peut servir de support au tiroir ou à un plat disposé dans la chambre de maintien au chaud.

Avantageusement encore les moyens de chauffe électriques additionnels comprennent un élément chauffant disposé dans la partie supérieure de la chambre de maintien au chaud. Cette disposition est particulièrement intéressante lorsque les moyens de chauffe additionnels assurent l'essentiel du chauffage de la chambre de maintien au chaud.

L'invention sera mieux comprise à l'étude de quatre exemples de réalisation, pris à titre nullement limitatif, illustrés dans les figures annexées, dans lesquelles :
- la figure 1 est une vue en en coupe d'un premier exemple de réalisation d'une friteuse selon l'invention,
- la figure 2 est une vue de dessous en perspective de la friteuse montrée à la figure 1, dans laquelle la partie inférieure du boîtier a été retirée,
- la figure 3 est une vue de dessus en perspective de la partie inférieure du boîtier de la friteuse montrée à la figure 1,
- la figure 4 est une vue schématique en coupe d'un deuxième exemple de réalisation d'une friteuse selon l'invention,
- la figure 5 est une vue schématique en coupe d'un troisième exemple de réalisation d'une friteuse selon l'invention,
- la figure 6 est une vue schématique en coupe d'un quatrième exemple de réalisation d'une friteuse selon l'invention.

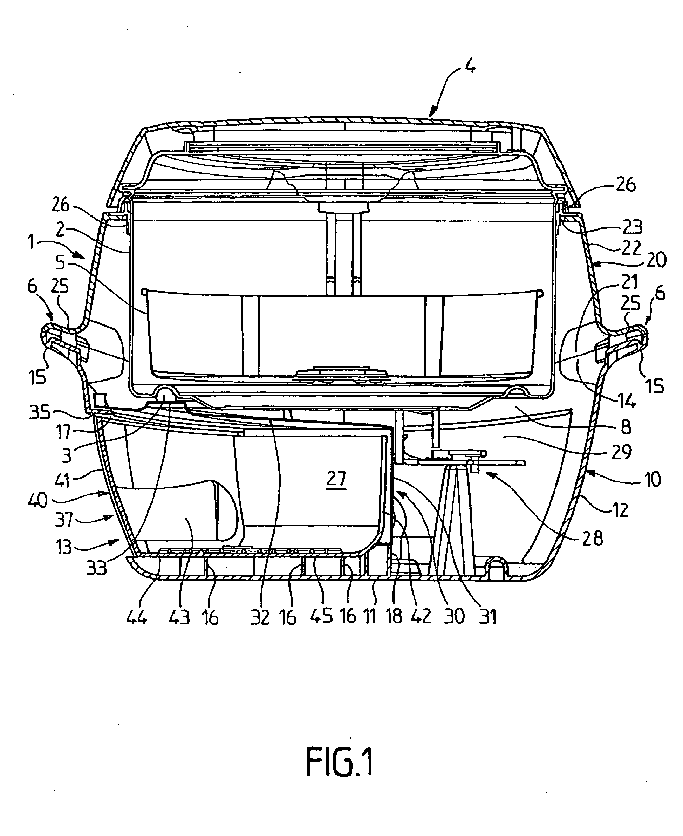

Un premier exemple de réalisation est montré aux figures 1 à 3. La figure 1 montre une friteuse comportant un boîtier extérieur 1 dans lequel est logée une cuve 2 prévue pour contenir un bain de friture. La cuve 2 est montée fixe dans le boîtier 1. La cuve 2 est associée à des moyens de chauffe électriques 3. Le boîtier 1 est fermé par un couvercle 4. La cuve 2 peut recevoir un panier 5 destiné à contenir les aliments à frire. Le boîtier 1 présente des organes de préhension 6.

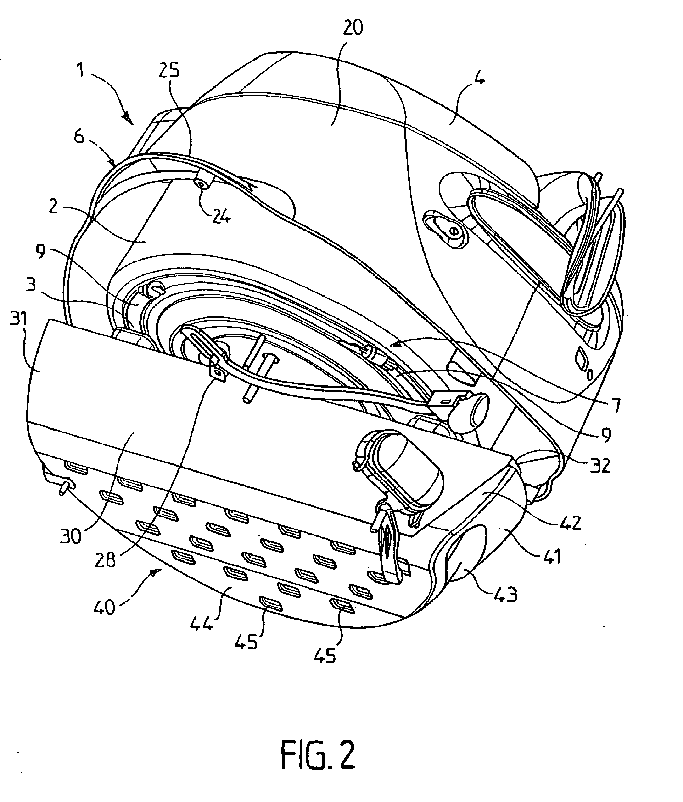

Le boîtier 1 visible aux figures 1 et 2 comporte une partie inférieure 10 formant un socle, ainsi qu'une partie supérieure 20 formant une jupe, agencées à distance de la cuve 2. La partie inférieure 10 du boîtier 1 comprend un fond 11 et une paroi latérale 12 définissant une ouverture supérieure 14. Dans la figure 2, la partie inférieure 10 du boîtier 1 a été retirée. La partie supérieure 20 du boîtier 1 comporte une paroi latérale 22 définissant une ouverture inférieure 21 et une ouverture supérieure 23. La partie inférieure 10 et la partie supérieure 20 du boîtier 1 sont par exemple réalisées en polypropylène. Une bague 26 repose sur la partie supérieure 20 du boîtier 1. Le bord supérieur de la cuve 2 repose sur la bague 26. La bague 26 est réalisée en une matière plastique résistant aux températures élevées atteintes par le bord supérieur de la cuve lors de la friture, telle que par exemple le PBTP.

Le boîtier 1 comporte deux organes de préhension 6 disposés de manière diamétralement opposée. Les organes de préhension 6 sont proéminents par rapport à la paroi latérale 12, 22 du boîtier 1. Les organes de préhension 6 comportent une face inférieure 15 appartenant à la partie inférieure 10 du boîtier 1 et une face supérieure 25 appartenant à la partie supérieure 20 du boîtier 1. Tel que visible aux figures 1, 2 et 3, chaque face inférieure 15 comporte un perçage 19 prévu pour recevoir une vis de fixation (non montrée aux figures) venant en prise dans un logement 24 de la face supérieure 25 correspondante.

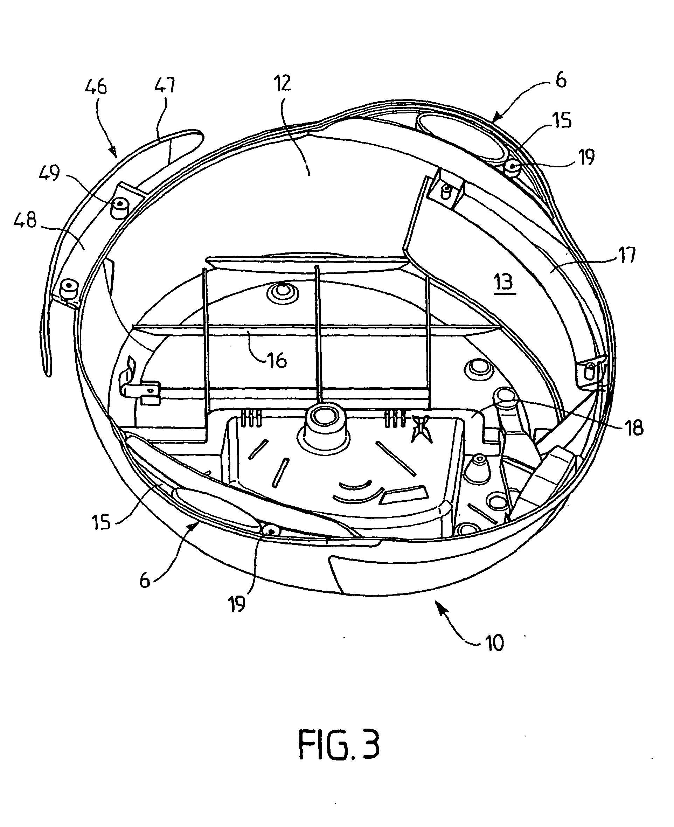

Le boîtier 1 comporte sur sa face arrière une conformation 46, prévue pour l'enroulement du cordon électrique de l'appareil. Tel que montré à la figure 3, la conformation 46 présente une paroi 47 reliée par un montant 48 à la partie inférieure 10 du boîtier 1. Le montant 48 comporte deux perçages 49 prévus chacun pour recevoir une vis de fixation venant en prise dans un logement ménagé dans un montant issu de la partie supérieure du boîtier, non visible sur les figures.

La figure 3 montre la partie inférieure 10 du boîtier 1. La paroi latérale 12 du boîtier 1 présente une ouverture latérale 13. L'ouverture latérale 13 ménagée dans la partie inférieure 10 du boîtier 1 permet l'accès à une chambre 27 ménagée dans le boîtier 1 en dessous de la cuve 2, visible à la figure 1. Les moyens de chauffe électriques 3 sont prévus pour chauffer la chambre 27 de manière à assurer un maintien au chaud des aliments déjà frits placés dans ladite chambre. Tel que montré à la figure 1, la chambre de maintien au chaud 27 est disposée au moins partiellement en dessous des moyens de chauffe électriques 3.

Un tiroir 40, visible aux figures 1 et 2, est disposé dans la chambre de maintien au chaud 27. Le tiroir 40 repose sur des montants de support 16 issus du fond 11 du boîtier 1. Le tiroir 40 présente une paroi latérale externe 41 formant une porte 37 prévue pour obturer de manière non étanche l'ouverture 13 du boîtier 1. La porte 37 comporte une zone de préhension 43. Le tiroir 40 comporte également une paroi latérale intérieure 42 et un fond 44. Le fond 44 présente des conformations en relief 45, telles que des bossages, permettant de favoriser l'égouttage des aliments frits disposés dans le tiroir 40.

Les moyens de chauffe électriques 3 sont susceptibles d'échauffer le fond de la cuve 2, essentiellement par conduction. Une tôle de protection 30, visible aux figures 1 et 2, est disposée sous une partie de la cuve 2. La tôle de protection 30 est en contact thermique avec les moyens de chauffe électriques 3, pour une meilleure répartition de l'échauffement dans la chambre de maintien au chaud 27. La tôle de protection 30 forme au moins une partie d'une paroi supérieure 32 de la chambre de maintien au chaud 27. A cet effet, la tôle de protection 30 s'étend jusqu'à un rebord interne supérieur 17 du boîtier 1 disposé au dessus de l'ouverture latérale 13. Tel que bien visible à la figure 1, la tôle de protection 30 est agencée entre les moyens de chauffe électriques 3 et la chambre de maintien au chaud 27. La tôle de protection 30 forme également une partie d'une paroi latérale 31 de la chambre de maintien au chaud 27. A cet effet, la tôle de protection 30 s'étend jusqu'à une nervure 18 issue du fond 11 du boîtier 1.

Derrière la paroi latérale 31 est ménagé un compartiment 29 dans lequel sont disposés des organes électriques 28 de régulation et/ou ou de sécurité. Tel que montré à la figure 1, le compartiment 29 est agencé dans le boîtier 1 sous la cuve 2 latéralement par rapport à la chambre de maintien au chaud 27. Les moyens de chauffe électriques 3 sont formés par un élément chauffant blindé 7, mieux visible à la figure 2. Une zone froide 8 est ménagée sous la cuve 2 au dessus du compartiment 29. Les parties chauffantes de l'élément chauffant 7 sont disposées hors de la zone froide 8. Les extrémités froides 9 de l'élément chauffant blindé 7 sont disposées dans le compartiment 29. Les organes électriques 28 de régulation et/ou de sécurité sont agencés dans la zone froide 8, afin de limiter l'influence thermique directe de l'élément chauffant 7 sur les organes électriques 28 de régulation et/ou ou de sécurité.

L'appareil selon l'invention s'utilise de la manière suivante. L'utilisateur prépare une première quantité d'aliments frits et les sort de la cuve 2 en utilisant par exemple le panier de cuisson 5. L'utilisateur extrait le tiroir 40 de la chambre de maintien au chaud 27 grâce à la zone de préhension 43 et verse les aliments frits dans le tiroir 40. L'utilisateur repousse ensuite le tiroir 40 dans la chambre de maintien au chaud 27. L'utilisateur peut alors préparer une deuxième quantité d'aliments frits. La porte 37 ménage avec l'ouverture 13 un passage 35 prévu pour laisser s'échapper vers l'extérieur du boîtier 1 les vapeurs issues des aliments frits disposés dans le tiroir 40, afin d'éviter le ramollissement prématuré desdits aliments. Lorsque la deuxième quantité d'aliments frits est prête, l'utilisateur peut servir ensemble les deux quantités d'aliments frits, sans dégradation gustative excessive.

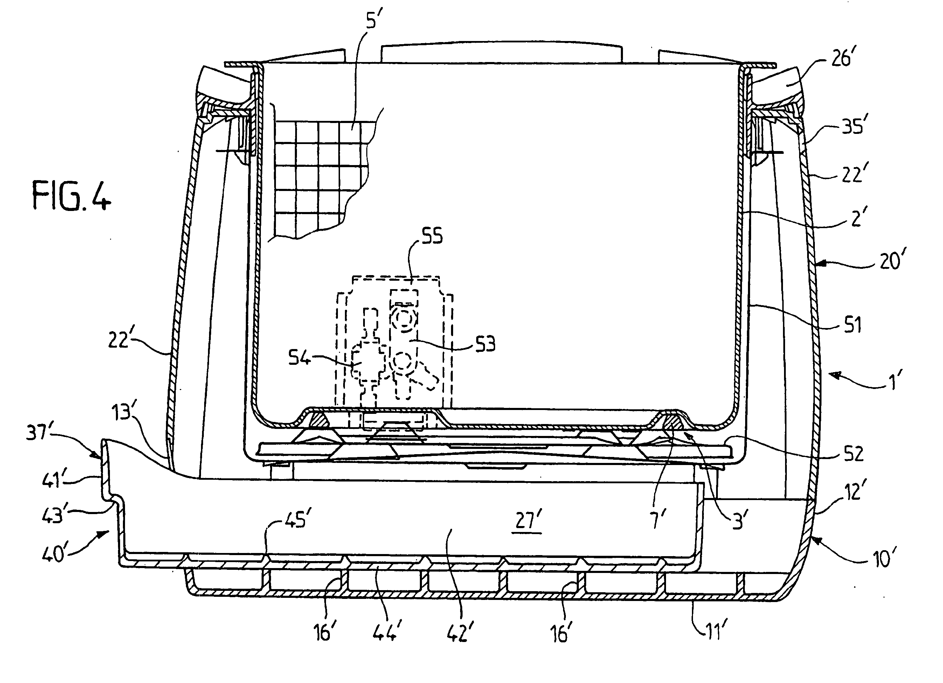

L'exemple de réalisation illustré à la figure 4 concerne une friteuse comportant une cuve 2' montée amovible dans un boîtier 1'. La cuve 2' peut recevoir un panier 5' destiné à contenir les aliments à frire. Un couvercle, non montré à la figure 4, peut fermer la partie supérieure du boîtier 1'. Une contre-cuve 51 est montée dans le boîtier 1'. Un réflecteur 52 est disposé sur le fond de la contre-cuve 51. La cuve 2' repose sur des moyens de chauffe électriques 3' montés sur le réflecteur 52.

Les moyens de chauffe électriques 3' sont susceptibles d'échauffer le fond de la cuve 2' par conduction, ainsi que par rayonnement grâce au réflecteur 52. Les moyens de chauffe électriques 3' sont formés par un élément chauffant blindé 7'. Un thermostat 53 et un fusible 54 sont agencés latéralement par rapport à la cuve 2'. Le thermostat 53 et le fusible 54 sont montés sur une plaque 55 montée flottante par rapport à la contre-cuve 51.

Le boîtier 1' comporte une partie inférieure 10' formant un socle, ainsi qu'une partie supérieure 20' formant une jupe, agencées à distance de la cuve 2'. La partie inférieure 10' du boîtier 1 comprend un fond 11' et une paroi latérale 12'. La partie supérieure 20' présente une paroi latérale 22'. La contre-cuve 51 est fixée à la partie supérieure 20' du boîtier 1'. Une bague 26' disposée sur la contre-cuve 51 protège la partie supérieure 20' du boîtier 1'.

Le réflecteur 52 permet de limiter l'échauffement du fond de la contre-cuve 51. En effet, du fait que les moyens de chauffe électriques 3' ne sont pas liés à la cuve 2', une partie importante de la puissance des moyens de chauffe électriques 3' est dissipée par rayonnement, et non seulement par conduction. Du fait des températures atteintes par le fond de la contre-cuve 51, le fond 11' du boîtier 1' doit être placé à une distance suffisante pour éviter un échauffement trop important, malgré la présence du réflecteur 52. Le thermostat 53 et le fusible 54 étant disposés latéralement par rapport à la cuve 2', l'espace sous la contre-cuve 51 est inoccupé. Cet espace peut être utilisé pour réaliser une chambre de maintien au chaud 27'.

Une ouverture latérale 13' ménagée dans la paroi latérale du boîtier 1' permet l'accès à la chambre de maintien au chaud 27'. L'ouverture latérale 13' est formée pour partie dans la paroi latérale 12' de la partie inférieure 10' et pour partie dans la paroi latérale 22' de la partie supérieure 20'. La chambre de maintien au chaud 27' est ménagée dans le boîtier 1' sous la contre-cuve 51'. La chambre de maintien au chaud 27' est disposée en dessous des moyens de chauffe électriques 3'. Tel que bien visible à la figure 4, le réflecteur 52 est agencé entre les moyens de chauffe électriques 3' et la chambre de maintien au chaud 27'.

La chambre de maintien au chaud 27' reçoit un tiroir 40', représenté en position légèrement sortie à la figure 4. Le tiroir 40' repose sur des montants de support 16' issus du fond 11'. Le tiroir 40' présente une paroi latérale externe 41' formant une porte 37' comportant une zone de préhension 43'. Le tiroir 40' comporte également une paroi latérale intérieure 42' et un fond 44'. Le fond 44' présente des conformations en relief 45' telles que des nervures, permettant de favoriser l'égouttage des aliments frits disposés dans le tiroir 40'.

La chambre de maintien au chaud 27' communique avec l'extérieur par un passage 35'. Le passage 35' est disposé au dessus de la chambre de maintien au chaud 27', près de la partie supérieure de la cuve 2'. Le passage 35' est formé par un orifice d'évacuation de vapeur ménagé dans la paroi latérale 22' sur une face opposée à la face comportant l'ouverture 13'.

Le fonctionnement de cet exemple de réalisation est comparable à celui de l'exemple de réalisation précédent.

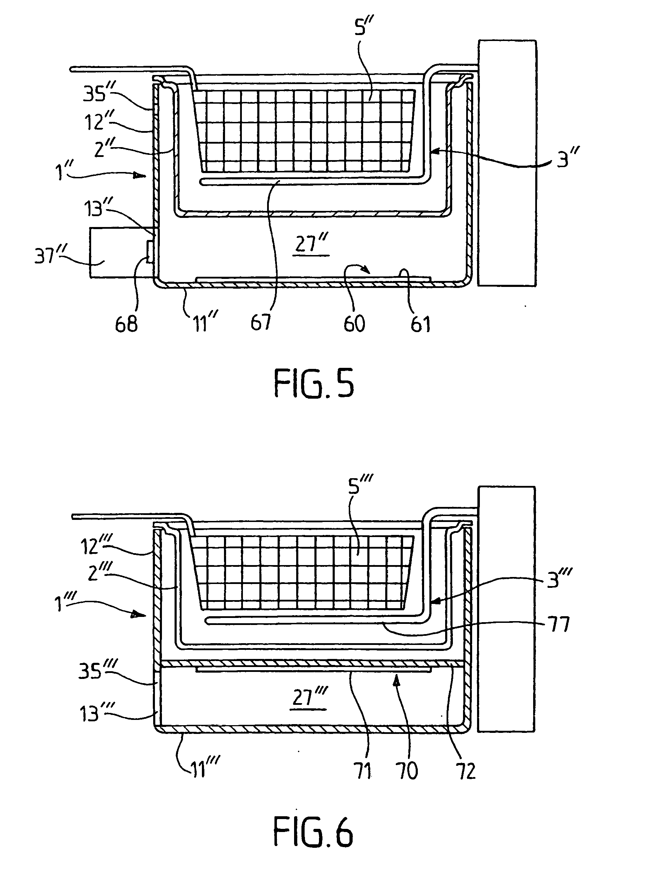

Deux autres exemples de réalisation sont montrés à la figure 5 d'une part et à la figure 6 d'autre part.

Dans ces exemples de réalisation, des moyens de chauffe électriques additionnels sont prévus pour assurer l'essentiel du chauffage de la chambre de maintien au chaud.

La figure 5 montre une friteuse comportant un boîtier extérieur 1" recevant une cuve 2". Des moyens de chauffe électriques 3" sont formés par un élément chauffant plongeant 67 placé dans la cuve 2" à distance du fond de la cuve, de manière à ménager une zone froide en dessous des moyens de chauffe 3". Un panier de cuisson 5" est placé dans la cuve 2" au dessus des moyens de chauffe. Le boîtier 1" comporte un fond 11" et une paroi latérale 12". Une ouverture latérale 13" est ménagée dans la paroi latérale 12" en dessous de la cuve 2". Une porte 37" montée sur une charnière 68 issue du boîtier 1" est prévue pour obturer l'ouverture latérale 13". L'ouverture latérale 13" permet l'accès à une chambre de maintien au chaud 27" ménagée dans le boîtier 1" sous la cuve 2". La chambre de maintien au chaud 27" communique avec l'extérieur par un passage 35" disposé au dessus de la chambre de maintien au chaud 27", près de la partie supérieure de la cuve 2". Le passage 35" est formé par un orifice d'évacuation de vapeur ménagé dans la paroi latérale 12" du boîtier 1".

Des moyens de chauffe électriques additionnels 60 sont prévus dans le boîtier 1". Les moyens de chauffe électriques additionnels 60 comprennent un élément chauffant 61 disposé dans la partie inférieure de la chambre de maintien au chaud 27". Les moyens de chauffe électriques additionnels 60 sont prévus pour assurer l'essentiel du chauffage de la chambre de maintien au chaud 27". Tel que bien visible à la figure 5, le fond de la cuve 2" est agencé entre les moyens de chauffe électriques 3" et la chambre de maintien au chaud 27".

Après avoir préparé une première quantité d'aliments frits, l'utilisateur dispose ces aliments dans un plat (non montré aux figures), place le plat dans la chambre de maintien au chaud 27" et ferme la porte 37". Le passage 35" permet l'échappement de la vapeur dégagée par les aliments frits disposés dans la chambre de maintien au chaud 27". L'utilisateur peut alors préparer une deuxième quantité d'aliments frits tout en gardant au chaud dans la chambre de maintien au chaud 27" la première quantité d'aliments frits.

La figure 6 montre une friteuse comportant un boîtier extérieur 1"' recevant une cuve 2"'. Des moyens de chauffe électriques 3"' sont formés par un élément chauffant plongeant 77 placé dans la cuve 2"' à distance du fond de la cuve, de manière à ménager une zone froide. Un panier de cuisson 5"' est placé dans la cuve 2"' au dessus des éléments chauffants électriques 3"'. Le boîtier 1"' comporte un fond 11"' et une paroi latérale 12"'. Une ouverture latérale 13"' est ménagée dans la paroi latérale 12"' en dessous de la cuve 2"'. L'ouverture latérale 13"' permet un accès à une chambre de maintien au chaud 27"' ménagée dans le boîtier 1"' sous la cuve 2"'.

Des moyens de chauffe électriques additionnels 70 sont prévus dans le boîtier 1"'. Les moyens de chauffe électriques additionnels 70 comprennent un élément chauffant 71 disposé dans la partie supérieure de la chambre de maintien au chaud 27"'. Les moyens de chauffe électriques additionnels 70 sont montés sous une cloison interne 72 du boîtier 1"'. La cloison 72 est agencée sous la cuve 2"'. Les moyens de chauffe électriques additionnels 70 sont prévus pour assurer l'essentiel du chauffage de la chambre de maintien au chaud 27"'. Tel que bien visible à la figure 6, le fond de la cuve 2"' est agencé entre les moyens de chauffe électriques 3"' et la chambre de maintien au chaud 27"'.

Après avoir préparé une première quantité d'aliments frits, l'utilisateur dispose ces aliments dans un plat (non montré aux figures), et place le plat dans la chambre de maintien au chaud 27"'. La vapeur dégagée par les aliments frits disposés dans la chambre de maintien au chaud 27"' peut s'échapper par l'ouverture 13"'. De ce fait, l'ouverture 13"' forme un passage 35"' mettant en communication la chambre de maintien au chaud 27"' avec l'extérieur du boîtier 1"'. L'utilisateur peut alors préparer une deuxième quantité d'aliments frits tout en gardant au chaud dans la chambre de maintien au chaud 27"' la première quantité d'aliments frits.

A titre de variante pour le premier exemple de réalisation, les moyens de chauffe électriques 3 ne sont pas nécessairement disposés sous la cuve 2. Les moyens de chauffe électriques 3 ne sont pas nécessairement en contact thermique avec la tôle de protection 30. Les moyens de chauffe électriques peuvent notamment être disposés à l'intérieur de la cuve, ou encore être ménagés dans la paroi d'une cuve moulée. La tôle de protection 30 peut être réalisée en plusieurs parties. La tôle de protection 30 peut être disposée à distance des moyens de chauffe électriques.

A titre de variante pour le deuxième exemple de réalisation, les moyens de chauffe électriques 3' ne sont pas nécessairement solidaires du boîtier 1', mais peuvent être montés sous la cuve 2' ou encore dans la paroi d'une cuve moulée.

A titre de variante pour le premier et/ou pour le deuxième exemple de réalisation, des moyens de chauffe électriques additionnels peuvent être ajoutés si désiré pour obtenir un meilleur maintien au chaud.

A titre de variante pour les différents exemples de réalisation, des moyens de chauffe électriques additionnels peuvent être combinés pour obtenir un meilleur maintien au chaud.

La présente invention n'est nullement limitée aux exemples de réalisation décrits et à leurs variantes, mais englobe de nombreuses modifications dans le cadre des revendications.

## Revendications

1. Friteuse électrique domestique comportant un boîtier (1 ; 1' ; 1" ; 1"') présentant un fond (11 ; 11' ; 11" ; 11"') et une paroi latérale (12 ; 12', 22' ; 12" ; 12"'), le boîtier (1 ; 1' ; 1" ; 1"') contenant une cuve (2 ; 2' ; 2" ; 2"') associée à des moyens de chauffe électriques (3 ; 3' ; 3" ; 3"'), la paroi latérale (12 ; 12', 22' ; 12" ; 12"') présentant une ouverture latérale (13 ; 13' ; 13" ; 13"') permettant l'accès à une chambre de maintien au chaud (2/ ; 27' ; 27" ; 27"') ménagée dans le boîtier (1 ; 1' ; 1" ; 1"') en dessous de la cuve (2 ; 2' ; 2" ; 2"'), les moyens de chauffe électriques (3 ; 3' ; 3" ; 3"') étant prévus pour chauffer la chambre de maintien au chaud (27 ; 27' ; 27" ; 27"'), **caractérisée en ce qu'**une tôle de protection (30), ou un réflecteur (52), ou le fond de la cuve (2" ; 2"') est agencé(e) entre les moyens de chauffe électriques (3; 3' ; 3" ; 3"') et la chambre de maintien au chaud (27 ; 27' ; 27" ; 27"').

2. Friteuse selon la revendication 1, **caractérisée en ce que** la tôle de protection (30) forme au moins une partie d'une paroi supérieure de la chambre de maintien au chaud (27).

3. Friteuse selon l'une des revendications 1 ou 2, **caractérisée en ce que** la tôle de protection (30) est en contact thermique avec les moyens de chauffe électriques (3).

4. Friteuse selon la revendication 3, **caractérisée en ce que** la tôle de protection (30) forme au moins une partie d'une paroi latérale (31) de la chambre de maintien au chaud (27).

5. Friteuse selon la revendication 1, **caractérisée en ce que** le réflecteur (52) est monté dans une contre cuve (51) dans laquelle est logée la cuve (2').

6. Friteuse selon la revendication 1, **caractérisée en ce que** les moyens de chauffe électriques (3" ; 3"') sont agencés à l'intérieur de la cuve (2" ; 2"').

7. Friteuse selon l'une des revendications 1 à 6, **caractérisée en ce que** les moyens de chauffe électriques (3 ; 3') sont susceptibles d'échauffer le fond de la cuve (2 ; 2'), et **en ce que** la chambre de maintien au chaud (27 ; 27') est disposée au moins partiellement en dessous des moyens de chauffe électriques (3 ; 3').

8. Friteuse selon l'une des revendications 1 à 6, **caractérisée en ce que** des moyens de chauffe électriques additionnels (60 ; 70) sont prévus pour chauffer la chambre de maintien au chaud (27 ; 27' ; 27" ; 27"').

9. Friteuse selon la revendication 8, **caractérisée en ce que** les moyens de chauffe électriques additionnels (60 ; 70) sont prévus pour assurer l'essentiel du chauffage de la chambre de maintien au chaud (27" ; 27"').

10. Friteuse selon l'une des revendications 8 ou 9, **caractérisée en ce que** les moyens de chauffe électriques additionnels (60) comprennent un élément chauffant (61) disposé dans la partie inférieure de la chambre de maintien au chaud (27").

11. Friteuse selon l'une revendications 8 à 10. **caractérisée en ce que** les moyens de chauffe électriques additionnels (70) comprennent un élément chauffant (71) disposé dans la partie supérieure de la chambre de maintien au chaud, (27"').

12. Friteuse selon l'une des revendications 1 à 7, **caractérisée en ce que** la chambre de maintien au chaud (27 ; 27') est dépourvue de moyens de chauffe électriques additionnels.

13. Friteuse selon l'une des revendications 1 à 12, **caractérisée en ce que** la chambre de maintien au chaud (27 ; 27' ; 27" ; 27"') communique par au moins un passage (35 ; 35' ; 35" ; 35"') avec l'extérieur du boîtier (1 ; 1' ; 1" ; 1"').

14. Friteuse selon l'une des revendications 1 à 12, **caractérisée en ce que** l'ouverture latérale (13 ; 13' ; 13") est obturée au moins partiellement par une porte (37 ; 37' : 37").

15. Friteuse selon la revendication 13, **caractérisée en ce que** l'ouverture latérale (13) est obturée partiellement par une porte (37), le passage (35) étant ménagé entre la porte (37) et la paroi latérale (12) du boîtier (1).

16. Friteuse selon l'une des revendications 14 ou 15, **caractérisée en ce que** la porte (37 ; 37') forme une paroi latérale externe (41 ; 41') d'un tiroir (40 ; 40') susceptible d'être disposé dans la chambre de maintien au chaud (27 ; 27').

17. Friteuse selon la revendication 16, **caractérisée en ce que** le tiroir (40 ; 40') comporte un fond (44 ; 44') muni de conformations en relief (45 ; 45').

18. Friteuse selon l'une des revendications 1 à 17, **caractérisée en ce que** des organes électriques (28) de régulation et/ou de sécurité sont disposés dans un compartiment (29) agencé dans le boîtier (1) sous la cuve (2) latéralement par rapport à la chambre do maintien au chaud (27).

19. Friteuse selon la revendication 18, **caractérisée en ce qu'**une zone froide (8) est ménagée sous la cuve (2) au dessus dudit compartiment (29), les organes électriques (28) de régulation et/ou de sécurité étant agencés dans ladite zone froide (8).

20. Friteuse selon l'une des revendications 1 à 19, **caractérisée en ce que** l'ouverture latérale (13) est ménagée dans une partie inférieure (10) du boîtier (1), le fond (11) du boîtier (1) appartenant ladite partie inférieure (10).

## Claims

1. A household electric deep fryer having a housing (1; 1'; 1"; 1"') comprising a bottom (11; 11'; 11"; 11"') and a side wall (12; 12', 22'; 12"; 12"'), the housing (1; 1'; 1"; 1"') containing a bowl (2; 2'; 2"; 2"') associated with electric heater means (3; 3'; 3"; 3"'), the side wall (12; 12', 22'; 12"; 12"') being provided with a side opening (13; 13'; 13"; 13"') giving access to a "hot" chamber for keeping food hot (27; 27'; 27"; 27"') provided in the housing (1; 1'; 1"; 1"') below the bowl (2; 2'; 2"; 2"'), the electric heater means (3; 3'; 3"; 3"') serving to heat the hot chamber (27; 27'; 27", 27"'), said household electric deep fryer being **characterized in that** a protective metal sheet (30), or a reflector (52), or the bottom of the bowl (2"; 2"') is arranged between the electric heater means (3; 3'; 3"; 3"') and the hot chamber (27; 27'; 27"; 27"').

2. A deep fryer according to claim 1, **characterized in that** the protective metal sheet (30) forms at least a portion of a top wall of the hot chamber (27).

3. A deep fryer according to claim 1 or claim 2, **characterized in that** the protective metal sheet (30) is in thermal contact with the electric heater means (3).

4. A deep fryer according to claim 3, **characterized in that** the protective metal sheet (30) forms at least a portion of a side wall (31) of the hot chamber (27).

5. A deep fryer according to claim 1, **characterized in that** the reflector (52) is mounted in a backing bowl (51) in which the bowl (2') is housed.

6. A deep fryer according to claim 1, **characterized in that** the electric heater means (3"; 3"') are arranged inside the bowl (2"; 2"').

7. A deep fryer according to any one of claims 1 to 6, **characterized in that** the electric heater means (3; 3') are suitable for heating the bottom of the bowl (2; 2'), and **in that** the hot chamber (27; 27') is disposed at least in part below the electric heater means (3; 3').

8. A deep fryer according to any one of claims 1 to 6, **characterized in that** additional electric heater means (60; 70) are provided for heating the hot chamber (27; 27'; 27"; 27"').

9. A deep fryer according to claim 8, **characterized in that** the additional electric heater means (60; 70) serve to perform most of the heating of the hot chamber (27"; 27"').

10. A deep fryer according to claim 8 or claim 9, **characterized in that** the additional electric heater means (60) comprise a heater element (61) disposed in the bottom portion of the hot chamber (27").

11. A deep fryer according to any one of claims 8 to 10, **characterized in that** the additional electric heater means (70) comprise a heater element (71) disposed in the top portion of the hot chamber (27"').

12. A deep fryer according to any one of claims 1 to 7, **characterized in that** the hot chamber (27; 27') is not provided with any additional electric heater means.

13. A deep fryer according to any one of claims 1 to 12, **characterized in that** the hot chamber (27; 27'; 27"; 27"') communicates via at least one passageway (35; 35'; 35"; 35"') with the outside of the housing (1; 1'; 1"; 1"').

14. A deep fryer according to any one of claims 1 to 12, **characterized in that** the side opening (13; 13'; 13") is closed off at least in part by a trapdoor (37; 37'; 37").

15. A deep fryer according to claim 13, **characterized in that** the side opening (13) is closed off in part by a trapdoor (37), the passageway (35) being provided between the trapdoor (37) and the side wall (12) of the housing (1).

16. A deep fryer according to claim 14 or 15, **characterized in that** the trapdoor (37; 37') forms an outer end wall (41; 41') of a drawer (40; 40') suitable for being disposed in the hot chamber (27; 27').

17. A deep fryer according to claim 16, **characterized in that** the drawer (40; 40') has a bottom (44; 44') provided with shaped pieces in relief (45; 45').

18. A deep fryer according to any one of claims 1 to 17, **characterized in that** regulator and/or safety electrical members (28) are disposed in a compartment (29) arranged in the housing (1) under the bowl (2) laterally relative to the hot chamber (27).

19. A deep fryer according to claim 18, **characterized in that** a cold zone (8) is provided under the bowl (2) above said compartment (29), the regulator and/or safety electrical members (28) being arranged in said cold zone (8).

20. A deep fryer according to any one of claims 1 to 19, **characterized in that** the side opening (13) is provided in a bottom portion (10) of the housing (1), the bottom (11) of the housing (1) belonging to said bottom portion (10).

## Patentansprüche

1. Elektrische Haushaltfriteuse mit einem Gehäuse (1; 1'; 1"; 1"'), das einen Boden (11; 11'; 11"; 11"') und eine Seitenwand (12; 12'; 22'; 12"; 12"') aufweist, wobei das Gehäuse eine Wanne (2; 2'; 2"; 2"') enthält, der elektrische Heizmitteln (3; 3'; 3"; 3"') zugeordnet sind, wobei die Seitenwand (12; 12'; 22'; 12"; 12"') eine seitliche Öffnung (13; 13'; 13"; 13"') aufweist, die den Zugang zu einer Warmhaltekammer (27; 27'; 27"; 27"') ermöglicht, die im Gehäuse (1; 1'; 1"; 1"') unterhalb der Wanne (2; 2'; 2"; 2"') ausgebildet ist, wobei die elektrischen Heizmittel (3; 3'; 3"; 3"') zum Heizen der Warmhaltekammer (27; 27'; 27"; 27"') vorgesehen sind, **dadurch gekennzeichnet, dass** ein Schutzblech (30) oder ein Reflektor (52) oder der Boden der Wanne (2"; 2"') zwischen den elektrischen Heizmitteln (3; 3'; 3"; 3"') und der Warmhaltekammer (27; 27'; 27"; 27"') angeordnet ist.

2. Friteuse nach Anspruch 1, **dadurch gekennzeichnet, dass** das Schutzblech (30) wenigstens einen Teil einer oberen Wand der Warmhaltekammer (27) bildet.

3. Friteuse nach einem der Ansprüche 1 oder 2, **dadurch gekennzeichnet, dass** das Schutzblech (30) in thermischem Kontakt mit den elektrischen Heizmitteln (3) steht.

4. Friteuse nach Anspruch 3, **dadurch gekennzeichnet, dass** das Schutzblech (30) wenigstens einen Teil einer Seitenwand (31) der Warmhaltekammer (27) bildet.

5. Friteuse nach Anspruch 1, **dadurch gekennzeichnet, dass** der Reflektor (52) in einer Gegenwanne (51) angebracht ist, in welcher die Wanne (2') aufgenommen ist.

6. Friteuse nach Anspruch 1, **dadurch gekennzeichnet, dass** die elektrischen Heizmittel (3"; 3"') innerhalb der Wanne (2"; 2"') angeordnet sind.

7. Friteuse nach einem der Ansprüche 1 bis 6, **dadurch gekennzeichnet, dass** die elektrischen Heizmittel (3; 3') den Boden der Wanne (2; 2') erhitzen können, und dass die Warmhaltekammer (27; 27') wenigstens teilweise unterhalb der elektrischen Heizmittel (3; 3') angeordnet ist.

8. Friteuse nach einem der Ansprüche 1 bis 6, **dadurch gekennzeichnet, dass** zusätzliche elektrische Heizmittel (60; 70) vorgesehen sind, um die Warmhaltekammer (27; 27'; 27"; 27"') zu erwärmen.

9. Friteuse nach Anspruch 8, **dadurch gekennzeichnet, dass** die zusätzlichen elektrischen Heizmittel (60; 70) vorgesehen sind, um den wesentlichen Teil der Erwärmung der Warmhaltekammer (27"; 27"') zu gewährleisten.

10. Friteuse nach einem der Ansprüche 8 oder 9, **dadurch gekennzeichnet, dass** die zusätzlichen elektrischen Heizmittel (60) ein Heizelement (61) aufweisen, das im unteren Teil der Warmhaltekammer (27") angeordnet ist.

11. Friteuse nach einem der Ansprüche 8 bis 10, **dadurch gekennzeichnet, dass** die zusätzlichen elektrischen Heizmittel (70) ein Heizelement (71) aufweisen, das im oberen Teil der Warmhaltekammer (27"') angeordnet ist.

12. Friteuse nach einem der Ansprüche 1 bis 7, **dadurch gekennzeichnet, dass** die Warmhaltekammer (27; 27') keine zusätzlichen elektrischen Heizmittel aufweist.

13. Friteuse nach einem der Ansprüche 1 bis 12, **dadurch gekennzeichnet, dass** die Warmhaltekammer (27; 27'; 27"; 27"') über mindestens einen Durchgang (35; 35'; 35"; 35"') mit der Außenseite des Gehäuses (1; 1'; 1"; 1"') verbunden ist.

14. Friteuse nach einem der Ansprüche 1 bis 12, **dadurch gekennzeichnet, dass** die Seitenöffnung (13; 13'; 13") wenigstens teilweise durch eine Tür (37; 37'; 37") verschlossen ist.

15. Friteuse nach Anspruch 13, **dadurch gekennzeichnet, dass** die Seitenöffnung (13) teilweise durch eine Tür (37) verschlossen ist, wobei der Durchgang (35) zwischen der Tür (37) und der Seitenwand (12) des Gehäuses (1) eingebracht ist.

16. Friteuse nach einem der Ansprüche 14 oder 15, **dadurch gekennzeichnet, dass** die Tür (37; 37') einen äußere Seitenwand (41 , 41') einer Schublade (40; 40') bildet, die in der Warmhaltekammer (27; 27') angeordnet sein kann.

17. Friteuse nach Anspruch 16, **dadurch gekennzeichnet, dass** die Schublade (40; 40') einen Boden (44; 44') aufweist, der mit erhabenen Ausformungen (45; 45') versehen ist.

18. Friteuse nach einem der Ansprüche 1 bis 17, **dadurch gekennzeichnet, dass** elektrische Steuer- und/oder Sicherheitsorgane (28) in einem Fach (29) angeordnet sind, das im Gehäuse (1) unterhalb der Wanne (2) seitlich zur Warmhaltekammer (27) angebracht ist.

19. Friteuse nach Anspruch 18, **dadurch gekennzeichnet, dass** ein kalter Bereich (8) unterhalb der Wanne (2) oberhalb des Fachs (29) eingebracht ist, wobei die elektrischen Steuer- und/oder Sicherheitsorgane (28) im kalten Bereich (8) angeordnet sind.

20. Friteuse nach einem der Ansprüche 1 bis 19, **dadurch gekennzeichnet, dass** die Seitenöffnung (13) in einem unteren Teil (10) des Gehäuses (1), wobei der Boden (11) des Gehäuses (1) zum unteren Teil (10) gehört.
